# EUROPÄISCHE PATENTSCHRIFT

(11) **EP 2 434 143 B1**
(45) Veröffentlichungstag und Bekanntmachung des Hinweises auf die Patenterteilung: **29.07.2015**
(21) Anmeldenummer: 11007097.6
(22) Anmeldetag: 01.09.2011
(51) Int. Cl.: F03D 1/06

(54) **Rotorblatt oder Rotorblattsegment für eine Windenergieanlage**
Rotor blade or rotor blade segment for a wind turbine
Pale de rotor ou segment d'une pale de rotor pour une éolienne

(30) Priorität: 22.09.2010 DE 102010046519
(43) Veröffentlichungstag der Anmeldung: 28.03.2012
(73) Patentinhaber: Nordex Energy GmbH, 22419 Hamburg (DE)
(72) Erfinder: Klein, Hendrik, 18057 Rostock (DE); Günther, Christian, 20251 Hamburg (DE)
(74) Vertreter: Hauck Patentanwaltspartnerschaft mbB

(56) Entgegenhaltungen:
- EP-A1- 0 019 691
- EP-A2- 2 199 604
- EP-A2- 2 208 885
- WO-A2-2009/135902
- GB-A- 2 166 202
- US-A1- 2007 105 431
- US-A1- 2010 080 667

## Beschreibung

Die Erfindung betrifft ein Rotorblatt oder ein Rotorblattsegment für eine Windenergieanlage, das mit einem Seil an einer Rotomabe oder an einem weiteren Rotorblattsegment befestigt wird.

Herkömmlicherweise erfolgt die Verbindung eines Rotorblatts mit einer Rotomabe durch Verschraubung des Rotorblatts mit einem Flansch der Rotornabe. Hierzu kann das Rotorblatt entweder ebenfalls einen Flansch aufweisen, durch den Gewindebolzen hindurchgeführt werden, oder die Gewindebolzen können in einer Wandung des Rotorblatts verankert werden, beispielsweise durch Einschrauben in einen Metallzylinder mit einer Gewindebohrung, der in einer senkrecht zur Längsrichtung des Gewindebolzens verlaufenden Bohrung in der Wandung des Rotorblatts aufgenommen ist.

Ebenfalls bekannt sind in mehrere Rotorblattsegmente unterteilte Rotorblätter. Eine Verbindung zwischen den Rotorblattsegmenten kann ebenfalls mit Gewindebolzen erfolgen. Die Druckschrift EP 2 199 604 A2 zeigt hierzu speziell geformte Einsatzstücke, die fest mit dem Rotorblattsegment verbunden sind und die Gewindebolzen aufnehmen.

Aus dem US-Patent Nr. US 7,393,184 B2 ist ein anderes, modular aufgebautes Rotorblatt für Windenergieanlagen bekannt geworden. Das bekannte Rotorblatt ist "scheibchenweise" aus einer Vielzahl von Rotorblattsegmenten aufgebaut, wobei Stahlseile durch die gesamte Länge der einzelnen Rotorblattsegmente hindurchgeführt und hinter einem nabenseitigen Endsegment und einem blattspitzenseitigen Endsegment verankert sind. In jedem Rotorblattsegment verlaufen parallel zu den Stahlseilen spezielle Versteifungselemente, die im Inneren des Rotorblatts angeordnet sind.

Druckschrift WO 2009/136902 A2 beschreibt ein zweigeteiltes Windenergieanlagenrotorblatt. Das Blattspitzensegment weist einen hervorstehenden Holmabschnitt auf, der in eine Aufnahme am blattwurzelseitigen Blattsegment eingesetzt und mit Hilfe eines Befestigungsmittels verspannt wird. Das Befestigungsmittel kann ein Stahlseil sein.

Druckschrift GB 2 166 202 A beschreibt Rotorblätter für Flugzeugpropeller oder Turbinen. Strukturelle Schäden an einem solchen Blatt sollen schwere Unfälle verursachen können. Als Sicherheitsmaßnahme schlägt die Druckschrift vor, innerhalb des hohl ausgeführten Blatts ein Bündel von Aramidfasern anzuordnen, dessen Enden einerseits an der Blattwurzel, andererseits an der Blattspitze befestigt sind. Der mittlere Abschnitt des Faserbündels verläuft lose innerhalb des hohl ausgeführten Blatts. Die Enden der Faserbündel sind aufgefächert und durch Einbettung in eine Kunststoffmatrix mit Blattwurzel bzw. Blattspitze verklebt.

Druckschrift EP 0 019 691 A1 zeigt ein aus mehreren Rotorblattsegmenten gefertigtes Rotorblatt. Die Rotorblattsegmente sind mit einem Spannelement miteinander verspannt. Am blattwurzelseitigen und blattspitzenseitigen Ende des Rotorblatts sind angrenzend an die Rotorblattsegmente Zuganker angeordnet, an denen die Spannelemente angreifen. Zusätzlich können zwischen den einzelnen Rotorblattsegmenten Zwischenanker angeordnet werden.

Davon ausgehend ist es die Aufgabe der Erfindung, ein Rotorblatt oder ein Rotorblattsegment für eine Windenergieanlage zur Verfügung zu stellen, das besonders einfach aufgebaut ist und einfach und stabil mit mindestens einem Seil an einer Rotornabe oder an einem weiteren Rotorblattsegment befestigt werden kann, sowie ein Verfahren zur Befestigung eines solchen Rotorblatts oder Rotorblattsegments an einer Rotornabe oder an einem weiteren Rotorblattsegment.

Diese Aufgabe wird gelöst durch das Rotorblatt oder Rotorblattsegment für eine Windenergieanlage mit den Merkmalen des Anspruchs 1. Vorteilhafte Ausgestaltungen sind in den sich anschließenden Unteransprüchen angegeben.

Das Rotorblatt oder Rotorblattsegment hat
- mindestens ein Seil zur Befestigung des Rotorblatts bzw. des Rotorblattsegments an einer Rotornabe oder an einem weiteren Rotorblattsegment, und
- eine Anschlussfläche, die im befestigten Zustand der Rotornabe bzw. dem weiteren Rotorblattsegment zugewandt ist und aus der ein freies Ende des mindestens einen Seils zur Befestigung an der Rotornabe bzw. dem weiteren Rotorblattsegment hervorsteht, wobei
- das mindestens eine Seil innerhalb eines Anschlussbereichs des Rotorblatts bzw. des Rotorblattsegments, der sich nur über einen an die Anschlussfläche angrenzenden Längsabschnitt des Rotorblatts bzw. des Rotorblattsegments erstreckt, verankert ist.

Das mindestens eine Seil kann insbesondere aus Stahl, aber auch aus Kunststoff bestehen. Es ist aus einer Vielzahl von in Längsrichtung des Seils erstreckten Elementen, insbesondere aus einer Vielzahl von Litzen, aufgebaut. Im Vergleich zu den aus dem Stand der Technik bekannten massiven Bolzen als Verbindungsmittel kann der Querschnitt des Seils deutlich geringer ausgelegt werden, um die gleiche Zugfestigkeit zu erreichen. Eine Verstärkung des Anschlussbereichs ist also nicht zwingend erforderlich. Aufgrund seiner Flexibilität kann das Seil entlang der Kontur des Rotorblatts geführt werden, wodurch Seile mit einer größeren Länge eingesetzt werden können. Diese besitzen eine höhere Dehnbarkeit und können Zugspannungen besser aufnehmen als die bekannten Bolzen.

Die Anschlussfläche kann eben oder gekrümmt sein. Sie ist der Rotomabe bzw. dem weiteren Rotorblattsegment zugewandt und im befestigten Zustand damit verspannt. Insbesondere kann die Anschlussfläche an eine Anschlussfläche des weiteren Rotorblattsegments unmittelbar angrenzen bzw. an einer Kontaktfläche, insbesondere einem Flansch, der Rotomabe anliegen. Aus der Anschlussfläche steht ein freies Ende des Seils hervor, so dass das Rotorblatt bzw. Rotorblattsegment durch Ausüben einer Zugkraft auf das freie Ende an die Rotomabe bzw. das weitere Rotorblattsegment herangezogen werden kann.

Bei der Erfindung ist das mindestes eine Seil innerhalb eines Anschlussbereichs verankert, d.h. fest mit dem Rotorblatt bzw. Rotorblattsegment verbunden. Der Anschlussbereich erstreckt sich dabei nur über einen an die Anschlussfläche angrenzenden Längsabschnitt des Rotorblatts bzw. des Rotorblattsegments, und nur in diesem Längsabschnitt ist das Seil mit dem Rotorblatt bzw. Rotorblattsegment verbunden. Der Längsabschnitt erstreckt sich nur über einen Teil der Gesamtlänge des Rotorblatts bzw. Rotorblattabschnitts. In einem anderen Längsabschnitt des Rotorblatts bzw. des Rotorblattsegments, der sich an den Anschlussbereich anschließt, ist das mindestens eine Seil nicht verankert. Eine Krafteinleitung von dem mindestens einen Seil in das Rotorblatt oder das Rotorblattsegment erfolgt ausschließlich im Anschlussbereich.

Im Gegensatz zu der aus dem US-Patent Nr. US 7,393,184 B2 bekannten Rotorblatt ist es bei der Erfindung nicht vorgesehen, dass mindestens eine Seil vollständig durch das Rotorblatt oder Rotorblattsegment hindurchzuführen, was in der Praxis wegen des über die Länge des Rotorblatts veränderlichen Querschnitts desselben problematisch ist. Aus diesem Grund müssen die vom Anschlussbereich verschiedenen Abschnitte des Rotorblatts bzw. Rotorblattsegments auch keine von dem mindestens einen Seil ausgeübte Zugspannungen aufnehmen und bedürfen keiner besonderen Versteifung. Das erfindungsgemäße Rotorblatt bzw. Rotorblattsegment ist daher besonders einfach aufgebaut.

Durch die Verankerung des Seils in dem Anschlussbereich wird zudem eine gleichmäßige und sichere Krafteinleitung in das Rotorblatt bzw. Rotorblattsegment erzielt. Gegebenenfalls kann der Anschlussbereich in seiner Gesamtheit oder im Bereich des mindestens einen Seils verstärkt sein.

Der Befestigungsabschnitt des mindestens einen Seils ist bei der Erfindung stoffschlüssig und/oder kraftschlüssig verankert, wobei der Befestigungsabschnitt mindestens fünfmal so lang ist wie der Durchmesser des mindestens einen Seils im Bereich des Befestigungsabschnitts. Insbesondere kann der Befestigungsabschnitt zehnmal so lang sein wie der Durchmesser des mindestens einen Seils im Bereich des Befestigungsabschnitts, oder länger. Durch eine solche Befestigung des Seils in einem relativ langen Befestigungsabschnitt erfolgt eine besonders großflächige Krafteinleitung in das Rotorblatt bzw. Rotorblattsegment. Die Verankerung kann beispielsweise stoffschlüssig durch Verkleben oder Vergießen des mindestens einen Seils in dem Rotorblatt bzw. Rotorblattsegment erfolgen, oder durch Aufpressen einer Hülse auf das mindestens eine Seil, welche ihrerseits mit dem Rotorblatt bzw. Rotorblattsegment verbunden wird, beispielsweise durch Verkleben.

In einer Ausgestaltung ist die Verankerung in einem vorgespannten Zustand des mindestens einen Seils hergestellt worden. Dies führt zu einer über die Länge des verankerten Seilabschnitts gleichmäßige Krafteinleitung in das Rotorblatt bzw. Rotorblattsegment.

Bei der Erfindung ist innerhalb des Anschlussbereichs ein Verankerungselement angeordnet, an oder in dem das mindestens eine Seil befestigt ist. Das Verankerungselement kann beispielsweise eine Hülse sein, in der das mindestens eine Seil kraft- und/oder formschlüssig verankert ist, gegebenenfalls in einem vorgespannten Zustand. Das Verankerungselement kann seinerseits kraft- oder formschlüssig mit dem Rotorblatt bzw. Rotorblattsegment verbunden sein. Die Krafteinleitung erfolgt über das Verankerungselement in das Rotorblatt.

In einer Ausgestaltung ist das mindestens eine Seil durch das Verankerungselement hindurchgeführt und dahinter befestigt. Beispielsweise kann das Verankerungselement eine Metallplatte mit einer Bohrung sein, durch die das mindestens eine Seil hindurchgeführt ist. Die Metallplatte kann fest mit dem Rotorblatt bzw. Rotorblattsegment verbunden sein, beispielsweise durch Verkleben oder Einlaminieren bei der Herstellung des Rotorblatts bzw. Rotorblattsegments. Die Befestigung des mindestens einen Seils hinter dem Verankerungselement kann beispielsweise mit Hilfe einer aufgepressten Hülse oder eine Seilklemme erfolgen.

In einer Ausgestaltung weist ein Ende des Seils, insbesondere das durch ein Verankerungselement hindurchgeführte Ende, eine Seilendhülse auf. Die Seilendhülse kann mit dem Ende des Seils vergossen oder verpresst sein. Die Seilendhülse kann ein Gewinde aufweisen, an dem die Seilendhülse befestigt werden kann, insbesondere hinter einem Verankerungselement, beispielsweise mit einer Mutter.

Bei der Erfindung ist das Verankerungselement ein Rohr oder ein Schlauch, das bzw. der in eine Wandung des Anschlussbereichs eingebettet ist. Das Verankerungselement kann zugleich eine Führung für das mindestens eine Seil zur Verfügung stellen. In diesem Fall kann das Verankerungselement bereits bei der Herstellung des Rotorblatts bzw. Rotorblattsegments in die Wandung des Anschlussbereichs eingebettet werden, insbesondere durch Einlaminieren. Anschließend kann das mindestens eine Seil in das Verankerungselement eingeführt und darin oder dahinter verankert werden. Alternativ ist es auch möglich, das mindestens eine Seil vor dem Einbetten des Verankerungselements in demselben zu verankern, insbesondere in einem vorgespannten Zustand, und anschließend das Verankerungselement bei der Fertigung des Rotorblatts oder Rotorblattsegments einzubetten. Dies kann die Fertigung vereinfachen, weil die Verankerung des Seils in dem Verankerungselement unabhängig von weiteren Fertigungsschritten des Rotorblatts bzw. Rotorblattsegments vorgefertigt werden kann.

In einer Ausgestaltung weist das mindestens eine Seil in dem Anschlussbereich einen gekrümmten Verlauf auf. Insbesondere kann das mindestens eine Seil in einem gleichmäßigen Abstand von einer äußeren Fläche des Anschlussbereichs verlaufen, insbesondere einer aerodynamischen Fläche. Dadurch kann die Krafteinleitung von dem mindestens einen Seil in das Rotorblatt bzw. Rotorblattsegment optimal an die Belastbarkeit des Anschlussbereichs angepasst werden.

In einer Ausgestaltung steht ein Endabschnitt des mindestens einen Seils innerhalb des Anschlussbereichs aus einer inneren Fläche des Anschlussbereichs hervor, d.h. der Endabschnitt weist in den Innenraum des Rotorblatts. Der Endabschnitt befindet sich an dem in dem Anschlussbereich verankerten Ende des Seils. Er kann in einem Winkel zu einer äußeren Fläche, insbesondere einer aerodynamischen Fläche, des Rotorblatts verlaufen. Der Endabschnitt kann geradlinig oder gekrümmt sein. Die innere Fläche des Anschlussbereichs, aus der der Endabschnitt hervorsteht, kann eine Innenseite einer Wandung des Anschlussbereiches und im Wesentlichen parallel zu der äußeren Fläche des Anschlussbereichs angeordnet sein, oder in einem Winkel dazu. Die innere Fläche kann eine Stufe aufweisen oder eine Stufe bilden, aus der der Endabschnitt hervorsteht. Der hervorstehende Endabschnitt ist von einer Innenseite des Rotorblatts bzw. Rotorblattsegments aus einfach zugänglich, sowohl zu Montagezwecken bei der Verankerung als auch zu Wartungszwecken.

In einer Ausgestaltung ist ein Längsabschnitt des mindestens einen Seils zwischen der Anschlussfläche und einem im Anschlussbereich verankerten Abschnitt nicht mit dem Anschlussbereich verbunden. Das mindestens eine Seil verläuft in dem Längsabschnitt also frei und kann wechselnde Zugspannungen elastisch aufnehmen. Es ist daher besonders gut möglich, eine gewünschte Vorspannung einzustellen und dauerhaft aufrechtzuerhalten.

In einer Ausgestaltung weist der Anschlussbereich eine Länge von 30 cm oder mehr auf. Der Anschlussbereich kann sich auch über eine Länge von 50 cm, 75 cm oder 1 m oder mehr erstrecken. Eine relativ große Länge des Anschlussbereichs begünstigt eine gleichmäßige und großflächige Krafteinleitung in das Rotorblatt bzw. das Rotorblattsegment.

Die oben genannte Aufgabe wird ebenfalls gelöst durch das Verfahren zur Befestigung eines Rotorblatts oder Rotorblattsegments an einer Rotomabe oder an einem weiteren Rotorblattsegment mit den Verfahrensschritten des Anspruchs 12. Vorteilhafte Ausgestaltungen des Verfahrens sind in den sich anschließenden Unteransprüchen angegeben.

Das erfindungsgemäße Verfahren weist die folgenden Schritte auf:
- Bereitstellen eines Rotorblatts oder eines Rotorblattsegments mit den Merkmalen des Anspruchs 1,
- Bereitstellen einer Rotornabe oder eines weiteren Rotorblattsegments, an dem das Rotorblatt bzw. das Rotorblattsegment befestigt werden soll,
- Anordnen von Rotorblatt oder Rotorblattsegment und Rotornabe bzw. weiterem Rotorblattsegment in einer vorgesehenen Montageposition, in der die Anschlussfläche der Rotornabe bzw. dem weiteren Rotorblattsegment zugewandt ist, und
- Verankern des hervorstehenden Endes des mindestens einen Seils in oder an der Rotomabe bzw. dem weiteren Rotorblattsegment.

Hinsichtlich der Verfahrensmerkmale wird auf die obigen Erläuterungen des erfindungsgemäßen Rotorblatts bzw. Rotorblattsegments verwiesen. Nach dem Verankern des hervorstehenden Endes des mindestens einen Seils ist eine hochbelastbare Verbindung der beiden Komponenten erreicht. Das Verfahren ist besonders einfach auszuführen, weil eines der beiden Enden des mindestens einen Seils bereits bei der Fertigung des Rotorblatts bzw. Rotorblattsegments verankert worden sein kann. Auf der Baustelle muss lediglich das hervorstehende Ende des mindestens einen Seils noch an der Rotomabe bzw. dem weiteren Rotorblattsegment verankert werden.

In einer Ausgestaltung des Verfahrens wird beim Verankern des hervorstehenden Endes des mindestens einen Seils in einem ersten Schritt eine definierte Vorspannung erzeugt und anschließend erfolgt eine Fixierung des hervorstehenden Endes. Die definierte Vorspannung kann beispielsweise mit einem hydraulischen Spannwerkzeug oder mit einem sonstigen Spannwerkzeug erzeugt werden. Das Fixieren des hervorstehenden Endes kann beispielsweise durch Aufschrauben einer Mutter auf eine mit einem Gewinde versehene Endhülse am hervorstehenden Ende des mindestens einen Seils erfolgen. Nach einer derartigen Fixierung kann das Spannwerkzeug abgenommen werden und die definierte Vorspannung bleibt erhalten. Insbesondere in Verbindung mit einem abschnittsweise frei verlaufenden Seil kann die definierte Vorspannung exakt und dauerhaft eingehalten werden.

In einer weiteren Ausgestaltung wird das hervorstehende Ende des Seils an der Rotomabe bzw. an dem weiteren Rotorblattsegment verankert, wie mit Blick auf die Verankerung des innerhalb des Anschlussbereichs des Rotorblatts bzw. Rotorblattsegments angeordneten Seilabschnitts vorstehend beschrieben. Beispielsweise kann ein Befestigungsabschnitt des hervorstehenden Endes des Seils über eine gewisse Länge stoffschlüssig und/oder kraftschlüssig und/oder formschlüssig, gegebenenfalls im vorgespannten Zustand des Seils, verankert werden, usw. Im Falle einer Verbindung zweier Rotorblattsegmente kann auch das weitere Rotorblattsegment einen Anschlussbereich mit einem der vorstehend erläuterten Merkmale aufweisen. Insbesondere können beide Enden des mindestens einen Seils bei der Verbindung zweier Rotorblattsegmente auf gleiche Art und Weise verankert werden.

Die Erfindung wird nachfolgend anhand von in Figuren dargestellten Ausführungsbeispielen näher erläutert. Es zeigen:
- Fig. 1: ein erfindungsgemäßes Rotorblatt mit zwei Rotorblattsegmenten in einer schematischen Draufsicht,
- Fig. 2: einen Anschlussbereich des in der Figur 1 rechts dargestellten Rotorblatt-segments in einer Querschnittsdarstellung,
- Fig. 3: eine Ausschnittsvergrößerung aus Figur 2,
- Fig. 4: ein weiteres Ausführungsbeispiel eines Anschlussbereichs eines Rotorblatt-segments in einer Querschnittsdarstellung.

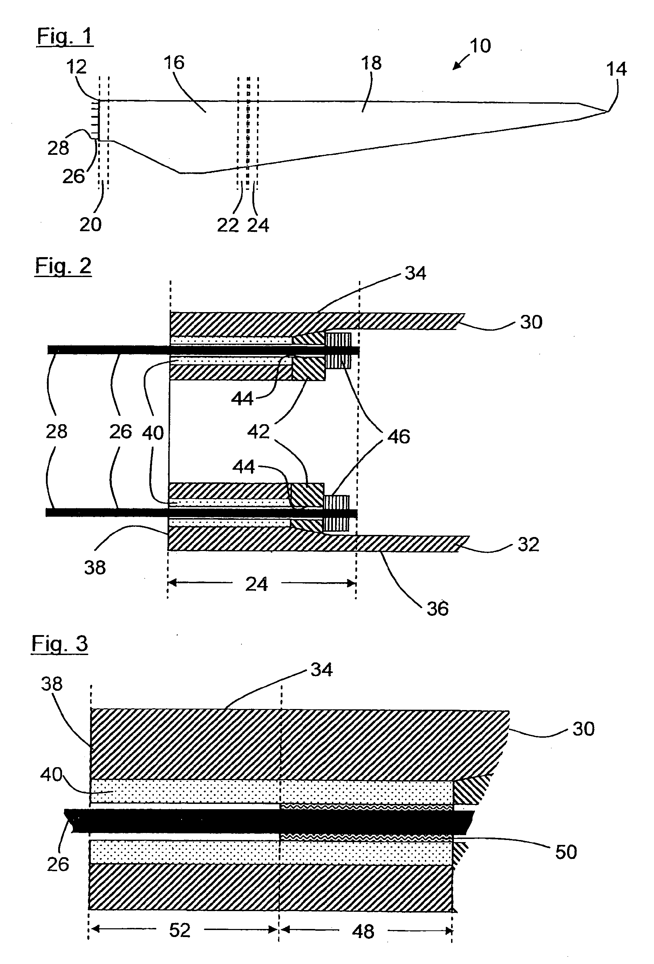

Das in Fig. 1 dargestellte Rotorblatt 10 hat eine Blattwurzel 12 und eine Blattspitze 14. Es ist aus zwei Rotorblattsegmenten 16, 18 zusammengesetzt. Das blattwurzelseitige Rotorblattsegment 16 erstreckt sich von der Blattwurzel 12 bis zu ungefähr einem Drittel der Gesamtlänge des Rotorblatts 10. Es weist einen sich an die Blattwurzel 12 anschließenden ersten Anschlussbereich 20 und einen zweiten Anschlussbereich 22 auf, der an dem an das blattspitzenseitige Rotorblattsegment 18 angrenzenden Ende des Rotorblattsegments 16 angeordnet ist. Das blattspitzenseitige Rotorblattsegment 18 erstreckt sich über ungefähr zwei Drittel der Gesamtlänge des Rotorblatts 10. Es weist einen Anschlussbereich 24 auf, der sich an das dem blattwurzelseitigen Rotorblattsegment 16 zugewandte Ende des Rotorblattsegments 18 anschließt. An der Blattwurzel 12 sind mehrere Stahlseile 26 angeordnet, deren freie Enden 28 aus dem Rotorblattsegment 16 hervorstehen. Die in der Figur 1 nicht sichtbaren anderen Enden der Seile 26 sind im Anschlussbereich 20 des Rotorblattsegments 16 fest verankert.

Figur 2 zeigt einen Teil des Rotorblattsegments 18 aus Figur 1 mit dem Anschlussbereich 24 in einer Querschnittsdarstellung. Das Rotorblattsegment 18 weist zwei aus einem faserverstärkten Kunststoffmaterial bestehende Wandungen 30, 32 auf. Die Außenseite der Wandung 30 bildet eine Saugseite 34 des Rotorblatts, die Außenseite der Wandung 32 bildet eine Druckseite 36 des Rotorblatts. Der Anschlussbereich 24 erstreckt sich über den von dem entsprechenden Pfeil bezeichneten Längsabschnitt des Rotorblattsegments 18, in dem die Seile 26 verankert sind. Bei den Seilen 26 handelt es sich um Stahlseile, die jeweils eine Vielzahl von verseilten Litzen aufweisen.

Das in der Figur 2 links dargestellte Ende der Wandungen 30, 32 bildet eine Anschlussfläche 38, die im befestigten Zustand dem weiteren Rotorblattsegment 16 zugewandt ist. Sie kann unmittelbar an eine Anschlussfläche des Anschlussbereichs 22 des Rotorblattsegments 16 angrenzen. Gegebenenfalls kann auch ein Zwischenstück eingefügt werden.

Die Wandungen 30, 32 sind im Anschlussbereich 24 nach innen verdickt. In die verdickten Bereiche der Wandungen 30, 32 ist für jedes Seil 26 ein Rohr 40 aus Stahl eingebettet, dessen eines Ende bündig mit der Anschlussfläche 38 abschließt. Die als Rohre 40 ausgebildeten Verankerungselemente sind beim Aufbau der Wandungen 30, 32 aus einem faserverstärkten Kunststoffmaterial einlaminiert worden. An die von der Anschlussfläche 38 entfernten Enden der Rohre 40 schließt sich jeweils ein weiteres Verankerungselement in Form einer Metallplatte 42 mit einer Bohrung 44 an. Die Seile 26 sind durch die Rohre 40 und die Bohrungen 44 in den Metallplatten 42 hindurchgeführt. Hinter den Metallplatten 42 ist jedes Seil mit einer aufgepressten Sicherung 46 gesichert.

In der Ausschnittsvergrößerung der Figur 3 ist erkennbar, dass zusätzlich zu dieser Verankerung an der Metallplatte 42 mit Hilfe der Sicherung 46 ein Befestigungsabschnitt 48 jedes Seils 26 mit Klebstoff 50 mit dem Rohr 40 verklebt ist. Die Krafteinleitung erfolgt in dieser Ausgestaltung großflächig über beide Verankerungselemente in das Rotorblatt. Ebenfalls in Figur 3 erkennbar ist, dass ein weiterer Längsabschnitt 52 des Seils 26, der zwischen der Anschlussfläche 38 und dem Befestigungsabschnitt 48 ausgebildet ist, nicht mit dem Rotorblattsegment 18 verbunden ist. In diesem Längsabschnitt 52 verläuft das Seil 26 frei durch das Rohr 40.

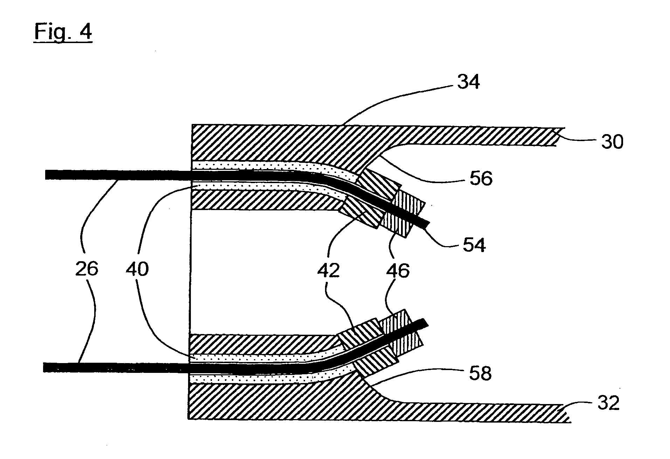

Das zweite Ausführungsbeispiel der Figur 4 zeigt eine der Figur 2 entsprechende Ansicht, wobei für sich entsprechende Teile die gleichen Bezugszeichen verwendet werden wie beim ersten Ausführungsbeispiel.

In der Figur 4 ist ein Endabschnitt 54 jedes Seils 26 in einem Winkel zur Saugseite 34 bzw. Druckseite 36 angeordnet und das Seil 26 hat einen gekrümmten Verlauf. Der Endabschnitt steht aus einer inneren Fläche 56, 58 der Wandung 30, 32 hervor und weist in den Innenraum des Rotorblatts. Die Rohre 40 sind ebenfalls entsprechend dem gekrümmten Verlauf der Seile 26 gekrümmt.

## Patentansprüche

1. Rotorblatt oder Rotorblattsegment für eine Windenergieanlage mit
• mindestens einem Seil (26) zur Befestigung des Rotorblatts (10) bzw. des Rotorblattsegments (16) an einer Rotornabe oder an einem weiteren Rotorblattsegment (18), und
• einer Anschlussfläche (38), die im befestigten Zustand der Rotornabe bzw. dem weiteren Rotorblattsegment (18) zugewandt ist und aus der ein freies Ende des mindestens einen Seils (26) zur Befestigung an der Rotornabe bzw. dem weiteren Rotorblattsegment (18) hervorsteht, **dadurch gekennzeichnet, dass**
• das mindestens eine Seil (26) innerhalb eines Anschlussbereichs (20, 22, 24) des Rotorblatts (10) bzw. des Rotorblattsegments (16), der sich nur über einen an die Anschlussfläche angrenzenden Längsabschnitt des Rotorblatts (10) bzw. des Rotorblattsegments (16) erstreckt, verankert ist, wobei
• innerhalb des Anschlussbereichs (20, 22, 24) als Verankerungselement (42) ein in eine Wandung des Anschlussbereichs (20, 22, 24) eingebettetes Rohr (40) oder ein in eine Wandung des Anschlussbereichs (20, 22, 24) eingebetteter Schlauch angeordnet ist, an oder in dem ein Befestigungsabschnitt (48) des mindestens einen Seils (26) stoffschlüssig und/oder kraftschlüssig verankert ist, wobei
• der Befestigungsabschnitt (48) mindestens fünfmal so lang ist wie der Durchmesser des mindestens einen Seils (26) im Bereich des Befestigungsabschnitts (48).

2. Rotorblatt oder Rotorblattsegment nach Anspruch 1, **dadurch gekennzeichnet, dass** die Verankerung in einem vorgespannten Zustand des mindestens einen Seils (26) hergestellt worden ist.

3. Rotorblatt oder Rotorblattsegment nach Anspruch 1 oder 2, **dadurch gekennzeichnet, dass** das mindestens eine Seil (26) durch das Verankerungselement (42) hindurchgeführt und dahinter befestigt ist.

4. Rotorblatt oder Rotorblattsegment nach einem der Ansprüche 1 bis 3, **dadurch gekennzeichnet, dass** ein Ende des Seils (26) eine Seilendhülse aufweist.

5. Rotorblatt oder Rotorblattsegment nach einem der Ansprüche 1 bis 4, **dadurch gekennzeichnet, dass** das mindestens eine Seil (26) in dem Anschlussbereich einen gekrümmten Verlauf aufweist.

6. Rotorblatt oder Rotorblattsegment nach einem der Ansprüche 1 bis 5, **dadurch gekennzeichnet, dass** ein Endabschnitt des mindestens einen Seils (26) innerhalb des Anschlussbereichs aus einer inneren Fläche des Anschlussbereichs hervorsteht.

7. Rotorblatt oder Rotorblattsegment nach einem der Ansprüche 1 bis 6, **dadurch gekennzeichnet, dass** ein Längsabschnitt des mindestens einen Seils (26) zwischen der Anschlussfläche (38) und einem im Anschlussbereich (20, 22, 24) verankerten Abschnitt nicht mit dem Anschlussbereich verbunden ist.

8. Rotorblatt oder Rotorblattsegment nach einem der Ansprüche 1 bis 7, **dadurch gekennzeichnet, dass** der Anschlussbereich (20, 22, 24) eine Länge von 30 cm oder mehr aufweist.

9. Verfahren zur Befestigung eines Rotorblatts oder Rotorblattsegments an einer Rotornabe oder einem weiteren Rotorblattsegment, mit den folgenden Schritten:
• Bereitstellen eines Rotorblatts (10) oder eines Rotorblattsegments (16, 18) mit den Merkmalen des Anspruchs 1,
• Bereitstellen einer Rotornabe oder eines weiteren Rotorblattsegments, an dem das Rotorblatt (10) bzw. das Rotorblattsegment (16, 18) befestigt werden soll,
• Anordnen von Rotorblatt (10) oder Rotorblattsegment (16, 18) und Rotornabe bzw. weiterem Rotorblattsegment in einer vorgesehenen Montageposition, in der die Anschlussfläche (38) der Rotornabe bzw. dem weiteren Rotorblattsegment (18) zugewandt ist, und
• Verankern des hervorstehenden Endes des mindestens einen Seils (26) in oder an der Rotornabe bzw. dem weiteren Rotorblattsegment (18).

10. Verfahren nach Anspruch 9, **dadurch gekennzeichnet, dass** beim Verankern des hervorstehenden Endes des mindestens einen Seils (26) in einem ersten Schritt eine definierte Vorspannung erzeugt wird und anschließend eine Fixierung des hervorstehenden Endes erfolgt.

11. Verfahren nach Anspruch 9 oder 10, **dadurch gekennzeichnet, dass** das hervorstehende Ende des Seils (26) an der Rotornabe bzw. an dem weiteren Rotorblattsegment (18) verankert wird, wie mit Blick auf die Verankerung des innerhalb des Anschlussbereichs des Rotorblatts (10) bzw. Rotorblattsegments (16) angeordneten Seilabschnitts in einem der Ansprüche 1 bis 10 beschrieben.

## Claims

1. Rotor blade or rotor blade segment for a wind turbine having
- at least one cable (26) for the fixation of the rotor blade (10) or rotor blade segment (16) on a rotor hub or on a further rotor blade segment (18), and
- a connecting surface (38), which, in the mounted state, faces the rotor hub or the further rotor blade segment (18) and from which a free end of the at least one cable (26) protrudes for fixation on the rotor hub or the further rotor blade segment (18), **characterized in that**
- the at least one cable (26) is anchored inside a connecting area (20, 22, 24) of the rotor blade (10) or the rotor blade segment (16), which extends over only a longitudinal section of the rotor blade (10) or the rotor blade segment (16) which adjoins the connecting surface, whereby
- inside the connecting area (20, 22, 24) a tube (40) or a hose is arranged, which is embedded in a wall of the connecting area (20, 22, 24) as an anchoring element (42), at or in which a fixation segment (48) of the at least one cable (26) is anchored in a substance-to-substance and/or force-fit manner, whereby
- the fixation segment (48) is at least five times as long as the diameter of the at least one cable (26) in the area of the fixation segment (48).

2. Rotor blade or rotor blade segment according to claim 1, **characterized in that** the anchoring is produced in a pre-tensioned state of the at least one cable (26).

3. Rotor blade or rotor blade segment according to claim 1 or 2, **characterized in that** the at least one cable (26) is guided through the anchoring element (42) and is fixed behind the same.

4. Rotor blade or rotor blade segment according to claim 1 to 3, **characterized in that** one end of the cable (26) has a cable end sleeve.

5. Rotor blade or rotor blade segment according to claim 1 to 4, **characterized in that** the at least one cable (26) has a curved course in the connecting area.

6. Rotor blade or rotor blade segment according to claim 1 to 5, **characterized in that** within the connecting area, an end segment of the at least one cable (26) protrudes from an inner surface of the connecting area.

7. Rotor blade or rotor blade segment according to claim 1 to 6, **characterized in that** a longitudinal segment of the at least one cable (26) is not connected to the connecting area between the connecting surface (38) and a segment anchored in the connecting area (20, 22, 24).

8. Rotor blade or rotor blade segment according to claim 1 to 7, **characterized in that** the connecting area (20, 22, 24) has a length of 30 cm or more.

9. Method for the fixation of a rotor blade or rotor blade segment on a rotor hub or a further rotor blade segment with the following steps:
- providing a rotor blade (10) or a rotor blade segment (16, 18) with the features of claim 1,
- providing a rotor hub or a further rotor blade segment on which the rotor blade (10) or rotor blade segment (20, 22, 24) is to be fixed,
- arranging the rotor blade (10) or rotor blade segment (16, 18) and rotor hub or further rotor blade segment in a designated mounting position in which the connecting surface faces (38) the rotor hub or further rotor blade segment (18), and
- anchoring of the protruding end of the at least one cable (26) in or on the rotor hub or further rotor blade segment (18).

10. Method according to claim 9, **characterized in that**, during anchoring of the protruding end of the at least cable (26), a defined pre-tensioning is generated in a first step and subsequently a fixation of the protruding end is effected.

11. Method according to claim 9 or 10, **characterized in that** the protruding end of the cable (26) is anchored on the rotor hub or on the further rotor blade segment (18), as described in one of the claims 1 to 8 in relation to the anchoring of the cable segment arranged inside the connecting area of the rotor blade (10) or rotor blade segment (16).

## Revendications

1. Pale de rotor ou segment d'une pale de rotor pour une éolienne, avec
• au moins un câble (26) pour la fixation de la pale de rotor (10) ou du segment de pale de rotor (16) sur un moyeu de rotor ou sur un autre segment de pale de rotor (18), et
• une surface de raccordement (38) tournée vers le moyeu de rotor ou vers l'autre segment de pale de rotor (18) dans l'état fixé, et à partir de laquelle fait saillie une extrémité libre de l'au moins un câble (26) pour la fixation sur le moyeu de rotor ou l'autre segment de pale de rotor (18), caractérisé(e) en ce que
• l'au moins un câble (26) est ancré à l'intérieur d'une zone de raccordement (20, 22, 24) de la pale de rotor (10) ou du segment de pale de rotor (16), laquelle s'étend seulement sur une portion longitudinale de la pale de rotor (10) ou du segment de pale de rotor (16) adjacente à la surface de raccordement, où
• un conduit (40) intégré dans une paroi de la zone de raccordement (20, 22, 24) ou un tube intégré dans une paroi de la zone de raccordement (20, 22, 24) est agencé à l'intérieur de la zone de raccordement (20, 22, 24) en tant qu'élément d'ancrage (42), sur ou dans lequel est ancrée une portion de fixation (48) de l'au moins un câble (26) par complémentarité de matière et/ou par adhérence, où
• la portion de fixation (48) est au moins cinq fois plus longue que le diamètre de l'au moins un câble (26) dans la région de la portion de fixation (48).

2. Pale de rotor ou segment de pale de rotor selon la revendication 1, caractérisé(e) en ce que l'ancrage a été réalisé dans un état précontraint de l'au moins un câble (26).

3. Pale de rotor ou segment d'une pale de rotor selon la revendication 1 ou 2, caractérisé(e) en ce que l'au moins un câble (26) passe à travers l'élément d'ancrage (42), tout en étant fixé derrière celui-ci.

4. Pale de rotor ou segment d'une pale de rotor selon l'une des revendications 1 à 3, caractérisé(e) en ce qu'une extrémité du câble (26) présente un manchon d'extrémité de câble.

5. Pale de rotor ou segment d'une pale de rotor selon l'une des revendications 1 à 4, caractérisé(e) en ce que l'au moins un câble (26) présente une courbure dans la zone de raccordement.

6. Pale de rotor ou segment d'une pale de rotor selon l'une des revendications 1 à 5, caractérisé(e) en ce que dans la zone de raccordement, une portion finale de l'au moins un câble (26) fait saillie à partir d'une surface intérieure de la zone de raccordement.

7. Pale de rotor ou segment d'une pale de rotor selon l'une des revendications 1 à 6, caractérisé(e) en ce qu'une portion longitudinale de l'au moins un câble (26) entre la surface de raccordement (38) et une portion ancrée dans la zone de raccordement (20, 22, 24) n'est pas reliée à la zone de raccordement.

8. Pale de rotor ou segment d'une pale de rotor selon l'une des revendications 1 à 7, caractéusé(e) en ce que la zone de raccordement (20, 22, 24) présente une longueur de 30 cm ou plus.

9. Procédé pour la fixation d'une pale de rotor ou d'un segment d'une pale de rotor sur un moyeu de rotor ou sur un autre segment de pale de rotor, avec les étapes suivantes :
• mise à disposition d'une pale de rotor (10) ou d'un segment de pale de rotor (16, 18) avec les caractéristiques de la revendication 1,
• mise à disposition d'un moyeu de rotor ou d'un autre segment de pale de rotor, sur lequel/laquelle doit être fixé(e) la pale de rotor (10) ou le segment de pale de rotor (16, 18),
• agencement de la pale de rotor (10) ou du segment de pale de rotor (16, 18) et du moyeu de rotor ou de l'autre segment de pale de rotor dans une position de montage prévue, dans lequel la surface de raccordement (38) est tournée vers le moyeu de rotor ou l'autre segment de pale de rotor (18), et
• ancrage de l'extrémité faisant saillie de l'au moins un câble (26) dans ou sur le moyeu de rotor ou l'autre segment de pale de rotor (18).

10. Procédé selon la revendication 9, **caractérisé en ce que** lors de l'ancrage de l'extrémité faisant saillie de l'au moins un câble (26), une précontrainte définie est réalisée dans une première étape, puis l'extrémité faisant saillie est fixée.

11. Procédé selon la revendication 9 ou 10, **caractérisé en ce que** l'extrémité du câble (26) faisant saillie est ancrée sur le moyeu de rotor ou sur l'autre segment de pale de rotor (18), de la manière décrite dans l'une des revendications 1 à 10 quant à l'ancrage de la portion de câble agencée à l'intérieur de la zone de raccordement de la pale de rotor (10) ou du segment de pale de rotor (16).
